# EUROPÄISCHE PATENTSCHRIFT

(11) **EP 0 945 651 B1**
(45) Veröffentlichungstag und Bekanntmachung des Hinweises auf die Patenterteilung: **10.04.2002**
(21) Anmeldenummer: 99114027.8
(22) Anmeldetag: 25.02.1997
(51) Int. Cl.: F16H 7/08

(54) **Mechanischer Kettenspanner**
Mechanical chain tensioner
Tendeur de chaîne mécanique

(30) Priorität: 29.02.1996 DE 29603718 U
(43) Veröffentlichungstag der Anmeldung: 29.09.1999
(62) Teilanmeldung aus: 97103046.5
(73) Patentinhaber: DaimlerChrysler AG, 70567 Stuttgart (DE)
(72) Erfinder: Schulze, Peter, 85375 Neufahrn (DE)

(56) Entgegenhaltungen:
- EP-A- 0 195 945
- EP-A- 0 581 219
- GB-A- 1 085 213
- US-A- 2 963 918

## Beschreibung

Die Erfindung betrifft einen mechanischen Kettenspanner der im Oberbegriff des Patentanspruchs 1 angegebenen Art.

Bei einem aus der Praxis bekannten mechanischen Kettenspanner dieser Art ist der Grundkörper ein Stanz-Biegeteil aus Blech konstanter Wandstärke. Der Grundkörper besitzt einen bogenförmigen Vertikalsteg, an dessen konkaver Unterseite aus Steifigkeitsgründen eine Querwand umgebogen ist. Zwei ausgestanzte Bohrungen bilden Befestigungsaufnahmen, in denen Hülsen vernietet oder in die Hülsen eingepreßt und verschweißt werden. Ein Widerlager für den Spannbügel ist ein in den Steg eingenieteter Lagerzapfen, auf den der Spannbügel in Zapfenlängsrichtung aufgeschoben und durch ein zusätzliches Sicherheitselement gegen Abziehen gesichert ist. Der Grundkörper ist in der Herstellung teuer und schwer. Er muß für jeden Befestigungsfall sozusagen maßgeschneidert sein, da die Abstände der Befestigungsaufnahmen für unterschiedliche Brennkraftmaschinentypen verschieden sind. Außerdem benötigt der Grundkörper eine Oberflächenbehandlung.

Bei einem aus EP-A-0 581 219 bekannten Kettenspanner ist ein massiver, metallischer Träger für den Spannbügel vorgesehen.

Bei einem aus der EP-A-0 195 945 bekannten Kettenspanner ist für den Kolben ein Führungsgehäuse im Kettenspannerträger vorgesehen, der aus Metall besteht. Die Spannschiene ist aus Kosten -und Gewichtsgründen mit Kunststoff ausgebildet.

Eine gattungsgemässe Vorrichtung mit den Merkmalen des Oberbegriffs des Anspruchs 1 ist bereits aus der US 2963918A bekannt.

Der Erfindung liegt die Aufgabe zugrunde, einen mechanischen Kettenspanner der eingangs genannten Art zu schaffen, der universell einsetzbar ist.

Die gestellte Aufgabe wird mit den Merkmalen des Anspruchs 1 gelöst.

Der Grundkörper ist für zumindest zwei verschiedene Einsatzfälle wahlweise verwendbar, bei denen die Abstände zwischen den Befestigungsstellen differieren. Zum Befestigen wird dann die jeweils passende Befestigungsbohrung gewählt. Damit läßt sich der Grundkörper universell einsetzen.

Anhand der Zeichnung wird eine Ausführungsform des Erfindungsgegenstandes erläutert. Es zeigen:
- Fig. 1: eine Vorderansicht eines mechanischen Kettenspanners,
- Fig. 2: eine Draufsicht des Kettenspanners,
- Fig. 3: eine Hinteransicht des Kettenspanners,
- Fig. 4: eine Perspektivansicht zu Fig. 1 und
- Fig. 5: eine Perspektivansicht zu Fig. 3.

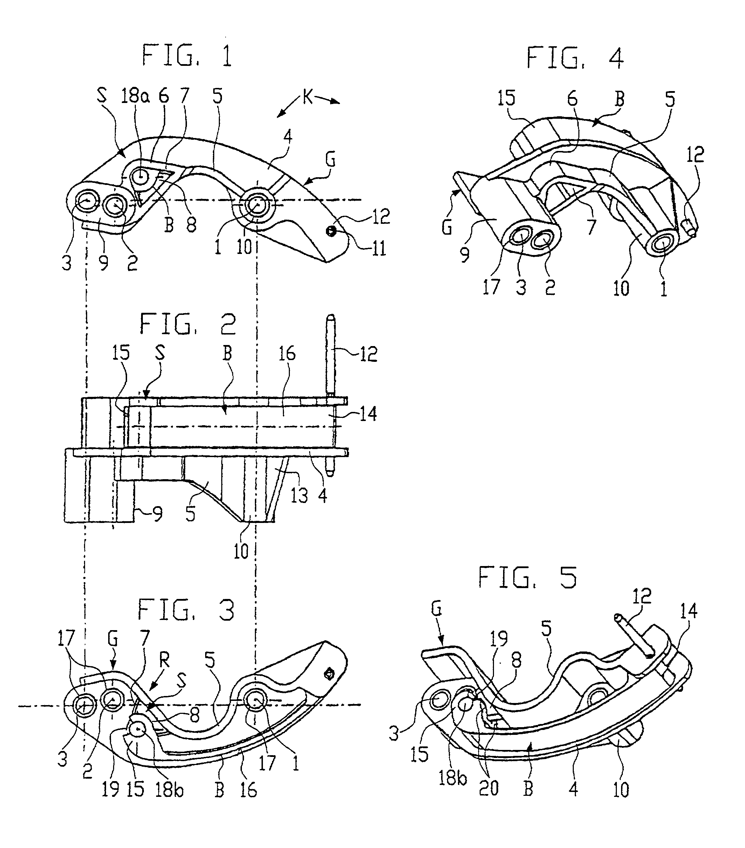

Ein mechanischer Kettenspanner, insbesondere für eine Brennkraftmaschine, weist einen Grundkörper G auf. Am Grundkörper G ist ein Spannbügel B anbringbar bzw. angebracht, der zur Zusammenarbeit mit einer nicht gezeigten Kette bestimmt ist. Zum Anbringen des Spannbügels B weist der Grundkörper G Widerlager auf. Der Grundkörper G ist ein einstückiger Formteil mit in Quervorsprüngen 10,9 geformten Befestigungsbohrungen, 1,2,3; (zum Festlegen des Grundkörpers G). Die Quervorsprünge 9,10 ragen von einem Mittelsteg 4 weg und sind mit diesem einstückig ausgebildet. Entlang der bogenförmig gekrümmten Unterseite des Mittelstegs 4 verlaufen an beiden Seiten Querwände 5, die an der Seite, an der die Quervorsprünge 9,10 vorstehen, die Quervorsprünge 9,10 aussteifend miteinander verbinden. Zusätzliche Versteifungsrippen 13 können vorgesehen sein. in einem Endbereich des Mittelsteges 4 ist eine Durchgangsbohrung 11 für ein Sicherungselement 12 geformt. Vom Quervorsprung 9 erstreckt sich eine bogenförmige geschwungene Querwand 6 bis zur Querwand 5, wobei zwischen den beiden Querwänden 5,6 ein annähernd dreieckiges Fenster 7 begrenzt wird, das den Mittelsteg 4 durchsetzt. Auf der Querwand 5 ist an der den Quervorsprüngen 9,10 abgewandten Seite des Mittelstegs 4 ein annähernd, z.B. dreieckiger Lagerbock 8 einstückig angeformt, dessen Wandstärke in etwa der Wandstärke des Mittelstegs 4 und/oder der Querwände 5,6 entspricht. Am Lagerbock 8 sind bei dieser Ausführungsform zwei einstückig angeformte koaxiale Lagerzapfen 18a, 18b vorgesehen, die in etwa senkrecht zum Mittelsteg 4 verlaufen und jeweils von einer Seite des Lagerbocks 8 abstehen. Der Lagerbock 8 bildet mit den Lagerzapfen 18a, 18b ein Schwenklager S für den am Grundkörper G zu montierenden Spannbügel B, der zweckmäßigerweise ein Formteil mit federnden Eigenschaften ist. Der Spannbügel B ist mit dem Grundkörper G über eine lösbare Rastverbindung R verbunden (Fig. 3 und 5) und wird durch den Lagerbock 8 in Achsrichtung der Lagerzapfen 18a, 18b zentriert.

Der Spannbügel B weist ein Ende 14 auf, das mittels des Sicherungselementes 12 zur Montage oder Demontage des Kettenspanners u.a. am Mittelsteg 4 festlegbar ist. Das andere Ende des Spannbügels B ist als Lagerauge 15 ausgebildet und am Schwenklager S schwenkbar befestigt. Der Rücken des gebogenen Spannbügels B definiert eine Gleitfläche 16.

Das Lagerauge 15 ist gabelartig ausgebildet (Fig. 5), so daß der Lagerbock 8 zwischen Seitenwände 20 des Lagerauges 15 eingreift und die Zentrierung bewirkt. Zum einfachen Aufklipsen des Spannbügels B sind im Lagerauge 15 Einführschlitze 19 ausgespart, durch die die Lagerzapfen 18a,18b beim Aufdrücken des Lagerauges 15 in Lagerbohrungen einrasten.

Zumindest der Quervorsprung 9 enthält mindestens zwei, vorzugsweise nahe benachbarte, Befestigungsbohrungen 2,3, so daß sich ein und derselbe Grundkörper G wahlweise unter Nutzen der Befestigungsbohrung 1 und der Befestigungsbohrung 2 oder der Befestigungsbohrung 3 festlegen läßt.

Durch die sich beiderseits des Mittelstegs erstreckenden Querwände 5 und die einstückig angeformten Quervorsprünge 9,10, gegebenenfalls mit Versteifungsrippen 13, ist der Grundkörper G bei geringem Gewicht sehr gestaltfest. Das an der Querwand 5 angeformte Schwenklager S sichert eine günstige Kraftübertragung, weil der parallel zur Ebene des Mittelstegs 4 Druckkräfte ausübende Spannbügel B sich auf der Querwand 5 abstützt.

## Patentansprüche

1. Mechanischer Kettenspanner, mit einem Befestigungsaufnahmen aufweisenden Formteil als Grundkörper, wobei der Grundkörper (G) einstückig angeformte, seitlich vorstehende Quervorsprünge (9, 10) mit jeweils wenigstens einer Befestigungsbohrung (1,2,3) aufweist **dadurch gekennzeichnet, daß** der Quervorsprung (9) wenigstens zwei benachbarte, parallele Befestigungsbohrungen (2,3) enthält.

## Claims

1. Mechanical chain tension adjuster, with a shaped part, as a basic body, which has attachment uptake means, whereby the basic body (B) has laterally projecting transverse projections (9, 10) formed on it, with, in each case, at least one attachment boring (1, 2, 3), **characterized in that** the transverse projection (9) contains at least two adjacent, parallel attachment borings (2, 3).

## Revendications

1. Tendeur de chaîne mécanique comportant une pièce moulée possédant un logement de fixation, en tant que corps de base (G), dans lequel le corps de base (G) comporte des parties saillantes transversales (9, 10) qui sont formées d'un seul tenant, font saillie latéralement et comportent chacune au moins un perçage de fixation (1, 2, 3), **caractérisé en ce que** la partie saillante transversale (9) contient au moins deux perçages de fixation parallèles voisins (2, 3).
